Europäisches Patentamt

European Patent Office

Office européen des brevets

(19)

(11) Publication number: **0 326 407**
**A2**

(12) # EUROPEAN PATENT APPLICATION

(21) Application number: **89300808.6**

(22) Date of filing: **27.01.89**

(51) Int. Cl.⁴: **C 09 K 15/00**

(30) Priority: **28.01.88 US 149508**

(43) Date of publication of application:
**02.08.89 Bulletin 89/31**

(84) Designated Contracting States: **DE FR GB IT**

(71) Applicant: **E.I. DU PONT DE NEMOURS AND COMPANY**
**1007 Market Street**
**Wilmington Delaware 19898 (US)**

(72) Inventor: **Obzansky, David Michael**
**216 E. Main Street**
**Elkton Maryland 21921 (US)**

(74) Representative: **Myerscough, Philip Boyd et al**
**J.A.Kemp & Co. 14, South Square Gray's Inn**
**London, WC1R 5EU (GB)**

(54) **Method for preparing aqueous analytical reagents containing water insoluble antioxidant.**

(57) A method for the preparation of aqueous analytical reagents containing water insoluble antioxidant dissolved in water miscible solvent through the use of an effective amount of carrier protein is provided.

EP 0 326 407 A2

Bundesdruckerei Berlin

## Description

## METHOD FOR PREPARING AQUEOUS ANALYTICAL REAGENTS CONTAINING WATER INSOLUBLE ANTIOXIDANT

### TECHNICAL FIELD

This invention relates to a method for the preparation of aqueous analytical reagents containing water insoluble antioxidant using an effective amount of carrier protein to solubilize the antioxidants.

### BACKGROUND ART

The stability of analytical reagents is of prime concern to manufacturers and users. Stable reagents are required for proper analytical results. In particular, aqueous analytical reagents are susceptible to hydrolysis and oxidation. An aqueous analytical reagent can undergo a free radical-initiated chain reaction which results in the oxidation of the active ingredient. This chain reaction can be initiated by heat, light (including ultraviolet radiant energy), peroxides, or heavy metals such as copper or iron. The initiation step results in the formation of a free radical which can then react with oxygen resulting in yet another free radical capable of starting the oxidation process.

Oxidation can be inhibited by the use of antioxidants. An ideal antioxidant for an aqueous analytical reagent should be stable and effective over a wide pH range, soluble in both its natural and oxidized states, effective in low concentrations, thermostable, and compatible with all other reagents in an analytical method. Solubility of an antioxidant or uniformity of dispersion in an aqueous analytical reagent is particularly important for pumping and dispensing purposes.

Commonly used water soluble antioxidants include sodium sulfite, sodium metabisulfite, sodium bisulfite, sodium thiosulphate, and ascorbic acid. Since these substances possess lower oxidation potentials than the active ingredient in the reagent, they undergo preferential oxidation. By undergoing oxidation, these antioxidants are consumed quickly and once consumed, they no longer effectively stabilize the reagent. At low concentrations, these antioxidants do not significantly contribute to the long-term stability of the aqueous analytical reagent. At higher concentrations, the antioxidants may no longer be soluble.

Water insoluble antioxidants, such as butylated hydroxyanisole (BHA) and butylated hydroxytoluene (BHT), can be used to retard oxidative degradation of oils and fats in various cosmetics and pharmaceuticals. These antioxidants act by reacting with free radicals and stopping chain reactions. Water insoluble antioxidants are ideal in that only small concentrations, typically 0.1%, are needed to increase long-term stability.

JP 57074384, published May 10, 1982, describes the preparation of an antioxidant composition by adding a water insoluble antioxidant solution dropwise under stirring to a polyhydroxyl compound, such as a glycol or sugar, containing at least 0.005% of water soluble protein. The material to be stabilized was not an aqueous solution.

Attempts have been made to solubilize water insoluble antioxidants in aqueous solutions by adding antioxidants directly to aqueous solutions. However, only very low concentrations of such antioxidants, generally ineffective for stabilizing aqueous solutions to oxidative degradation, have been achieved. There is a need for aqueous analytical reagents stabilized by water insoluble antioxidants.

### DISCLOSURE OF THE INVENTION

The method of this invention for preparing aqueous analytical reagents containing water insoluble antioxidant comprises the steps of:
    (a) first dissolving a water insoluble antioxidant in water miscible solvent to form a first solution, and
    (b) mixing said first solution with an aqueous solution containing an active ingredient and an effective amount of carrier protein to keep the water insoluble antioxidant in solution.

### DESCRIPTION OF THE INVENTION

The method of this invention is useful for preparing aqueous analytical reagents containing water insoluble antioxidant. The aqueous analytical reagent contains active ingredients, such as enzymes and antibodies, which can degrade by oxidation. Water insoluble antioxidants, such as butylated hydroxyanisole (BHA) and butylated hydroxytoluene (BHT), can protect active ingredients by reacting with free radicals formed in aqueous solutions and stopping free radical-initiated chain reactions from proceeding. BHA and BHT are effective at low concentrations and, therefore, are ideal for use in aqueous analytical reagents.

It was found unexpectedly that water insoluble antioxidants could be incorporated into aqueous solutions of active ingredients utilizing an effective amount of protein. The protein can act as a carrier for the antioxidant. It is believed that the water insoluble antioxidant, dissolved in a water miscible solvent, can bind noncovalently to the surface of the protein helping to keep the antioxidant in solution or uniformly dispersed in solution. Various proteins can be used for this purpose such as albumin and globulin. Albumin, such as bovine serum albumin (BSA), is preferred since it has numerous binding sites available.

The method of the present invention comprises a two-step procedure wherein the water insoluble antioxidant is first dissolved and then added to an aqueous solution containing protein and active ingredient. Specifically, a water insoluble antioxidant, such as BHA and BHT, is dissolved in a water miscible solvent.

Many water miscible solvents can be utilized including alcohol, for example, ethanol, and mixtures of non-water miscible and water miscible solvents wherein the resulting mixture is water miscible. Propylene glycol can also be used for solubilizing BHA. However, BHT is not sufficiently soluble in propylene glycol for effective use. Ethanol is the solvent of choice.

The solution formed by dissolving a water insoluble antioxidant is then mixed with an aqueous solution containing an active ingredient and an effective amount of carrier protein. An effective amount of carrier protein is that amount which will noncovalently bind the water insoluble antioxidant to keep it in solution or uniformly dispersed in solution. The weight ratios of carrier protein to BHA and BHT should be greater than 10 to 1 and 100 to 1, respectively. Upon mixing the two solutions, the water insoluble antioxidant will remain in solution and a stabilized aqueous analytical reagent is formed.

Among many other factors, water insoluble antioxidants have a major advantage over commonly used water soluble antioxidants in that they are effective at low concentrations and are stable for long periods of time.

The following example illustrates the invention:

### EXAMPLE

### PREPARATION OF AQUEOUS TETRAHYDROCANNABINOL (THC) ENZYME CONJUGATE REAGENTS CONTAINING BHA AND BHT

A 20-mg/mL stock solution of each of BHA and BHT was prepared by dissolving 200 mg of BHA (available from Sigma cat. B1253) and BHT (available from Sigma cat. B1378) in 10 mL aliquots of ethanol.

Two solutions of a tetrahydrocannabinol enzyme conjugate reagent [$\Delta^9$-THC-G6PDH conjugate, tris(hydroxymethyl)aminomethane buffer, bulking agents, stabilizers, and sodium azide; pH 8.0] were prepared by adding 0.5 mL of a 30% bovine serum albumin (BSA) solution to 1.4 mL of the tetrahydrocannabinol enzyme conjugate reagent. A 0.1-mL aliquot of the BHA stock solution was added to one of the conjugate reagent solutions, and a 0.1-mL aliquot of the BHT stock solution was added to the other. BHA was completely solubilized while BHT formed a uniform dispersion in the tetrahydrocannabinol enzyme conjugate reagent solutions. Two controls were prepared by replacing the BSA solution with 0.5 mL of deionized water. Neither BHA nor BHT could be solubilized in the absence of carrier protein.

## Claims

1. A method for preparing an aqueous analytical reagent containing a water insoluble antioxidant which comprises:
(a) dissolving a water insoluble antioxidant in a water miscible solvent to form a first solution, and
(b) mixing said first solution with an aqueous solution containing an active ingredient and an effective amount of a carrier protein to keep the water insoluble antioxidant in solution.

2. A method according to Claim 1 wherein the water insoluble antioxidant is butylated hydroxyanisole (BHA) or butylated hydroxytoluene (BHT).

3. A method according to Claim 2 wherein the water insoluble antioxidant is BHA and the weight ratio of carrier protein to BHA is greater than 10 to 1.

4. A method according to Claim 2 wherein the water insoluble antioxidant is BHT and the weight ratio of carrier protein to BHT is greater than 100 to 1.

5. A method according to Claim 2 or 3 wherein the water insoluble antioxidant is BHA and the water miscible solvent is an alcohol or propylene glycol.

6. A method according to Claim 2 or 4 wherein the water insoluble antioxidant is BHT and the water miscible solvent is an alcohol.

7. A method according to Claim 5 or 6 wherein the alcohol is ethanol.

8. A method according to any one of the preceding claims wherein the carrier protein is an albumin.

9. A method according to Claim 8 wherein the albumin is bovine serum albumin.